# EUROPEAN PATENT APPLICATION

(11) **EP 4 243 141 A1**
(43) Date of publication of application: **13.09.2023**
(21) Application number: 23712457.3
(22) Date of filing: 09.01.2023
(51) Int. Cl.: H01M 10/04, H01M 10/0525, H01M 10/0587

(54) **BATTERY AND ELECTRONIC DEVICE PROVIDED WITH SAME**

(30) Priority: 27.01.2022 CN 202210103502
(71) Applicant: Ningde Amperex Technology Limited, Zhangwan Town, Jiaocheng District, Fujian Province Ningde City Fujian 352100 (CN)
(72) Inventor: LI, Xuecheng, Ningde, Fujian 352100 (CN); ZHANG, Yuanbing, Ningde, Fujian 352100 (CN)
(74) Representative: Icosa
(86) International application number: PCT/CN2023/071340
(87) International publication number: WO 2023/143009

(57) **Abstract**

This application provides a battery and an electronic device containing same. The battery includes a housing, an electrode assembly, a first bonding part, and a second bonding part. The electrode assembly includes a body portion and a first metal portion. The first metal portion protrudes from the body portion along a first direction. The body portion includes a first protruding portion, a first portion, and a second protruding portion that are connected in sequence. The first portion includes a first surface and a second surface disposed opposite to each other in the second direction. The first protruding portion includes a third surface located on a same side as the first surface and a fourth surface disposed opposite to the third surface. The second protruding portion includes a fifth surface located on the same side as the first surface and a sixth surface disposed opposite to the fifth surface. The first protruding portion includes a seventh surface in the first direction. The first bonding part is configured to bond the first surface, the third surface, the seventh surface, the fourth surface, and the second surface. The second bonding part is configured to bond the first surface and the fifth surface but not to bond the sixth surface. The battery according to this application can effectively solve a voltage-drop-induced failure caused by shrinkage of the separator during dropping of the battery.

## Description

### TECHNICAL FIELD

This application relates to the technical field of batteries, and in particular, to a battery and an electronic device containing same.

### BACKGROUND

Secondary batteries (batteries for short) generally include consumer batteries, power batteries, and energy storage batteries. Among such types, a consumer battery is generally applicable to a portable device such as a mobile phone, a camera, a notebook computer, and other electronic devices; a power battery is applicable to an electric vehicle, an electric bicycle, and other electronic devices; and an energy storage battery is applicable to an energy storage station. A consumer battery, a power battery, and an energy storage battery each generally includes a housing and an electrode assembly. The electrode assembly includes a body portion that includes a first electrode plate, a second electrode plate, and a separator. The body portion is filled with an electrolytic solution and accommodated in an accommodation cavity formed by the housing.

The electrolytic solution in the battery generally includes a lithium salt, an organic solvent, and an additive. A part of the electrolytic solution fills in the body portion, and the other part of the electrolytic solution exists in a free state in the accommodation cavity formed by the housing. With the electrolytic solution being an important part of the battery, the composition and content of the electrolytic solution exert a vital impact on the performance of the battery, for example, on the capacity, cycle life, and internal pressure of the battery.

Currently, the body portion of a battery is mainly classed into a stacked type and a jelly-roll type. A stacked-type battery is a combination of a plurality of laminates, each laminate being formed by stacking a first electrode plate, a separator, and a second electrode plate in sequence. A jelly-roll-type battery is formed by stacking the first electrode plate, the separator, and the second electrode plate in sequence and then winding the stacked plates. An outermost circle of the jelly-roll structure generally ends with the separator or the first electrode plate. The first electrode plate includes a first current collector and a first active material layer disposed on the first current collector, and the second electrode plate includes a second current collector and a second active material layer disposed on the second current collector. The first active material layer may be intermittently or continuously applied onto the first current collector, and the second active material layer may be intermittently or continuously applied onto the second current collector. An uncoated region of the first current collector and an uncoated region of the second current collector may form a first metal portion and a second metal portion respectively by die-cutting, or the first current collector and the second current collector may be directly or indirectly soldered to a first metal portion and a second metal portion respectively.

With the development of modern society, multitudinous electronic devices are becoming intelligent and versatile. In order to meet requirements of the electronic devices on capacity and power and ensure a sufficient endurance time of the electronic devices, a secondary battery is required to provide a higher energy density and a higher capacity, and achieve high safety and excellent cycle performance at the same time. Therefore, in order to meet various performance requirements of the secondary battery, more in-depth research and exploration have been carried out on the cell design, battery structure, and production process of the battery in the industry.

### SUMMARY

An objective of this application is to provide a battery and an electronic device containing same. The battery achieves a trade-off between performance indicators such as electrolyte infiltration ability and energy density of the battery, and also alleviates the safety problem arising from a voltage-drop-induced failure caused by the shrinkage of a separator during dropping of the battery.

The voltage-drop-induced failure caused by the shrinkage of the separator during dropping of the battery is a commonly seen battery failure mode. Currently, the shrinkage of the separator caused by dropping of the battery may be overcome by the following commonly used means in the industry: 1) a first means is to reduce the amount of an electrolytic solution retained in the battery and reduce the impact caused by free electrolytic solution onto the separator, so as to suppress the shrinkage of the separator. However, the reduced amount of retained electrolytic solution affects the infiltration ability of the electrolytic solution, affects an electrolyte interface in a later stage of the battery lifespan, results in rapid fading of capacity, decreases the energy density, and greatly shortens the lifespan. 2) A second means is to use a high-adhesivity separator. The high-adhesivity separator suppresses the shrinkage of the separator by increasing the adhesivity between the separator and an electrode plate, but the effect of this means is limited and the problem is not solved thoroughly. 3) A third means is to wind adhesive tape around an electrode assembly, that is, wind the adhesive tape from one side of the electrode assembly to the opposite side, but this mean protects just local regions against the recoil caused by the electrolytic solution to the separator, and alleviates the voltage-drop-induced failure to a limited extent, so that the improvement effect is limited.

The applicant of this application has researched the shrinkage mechanism of the separator on the basis of the foregoing means, and has found in the research that the shrinkage of an innermost layer of separator of the electrode assembly occurs primarily at a first protruding portion of the electrode assembly, and the shrinkage of an outermost layer of separator occurs primarily at the first protruding portion and a second protruding portion on a first surface of the electrode assembly. A current collector at the first protruding portion and the second protruding portion on the first surface is exposed due to the impact of the electrolytic solution and the detachment of the electrode plate. The detachment of the electrode plate is caused by abrasion that occurs when a housing rubs against the outermost layer of a first electrode plate. In this case, when the separator shrinks, the first current collector contacts the opposite second electrode plate to cause a short circuit between the first current collector and the second electrode plate. The voltage is sharply dropped instantaneously, and a large amount of heat is generated, resulting in safety hazards.

Based on the research on the foregoing mechanisms, this application provides a battery. The battery includes a housing, an electrode assembly, a first bonding part, and a second bonding part. The housing forms an accommodation cavity. The electrode assembly includes a body portion, a first metal portion, and a second metal portion of a polarity opposite to a polarity of the first metal portion. The body portion is accommodated in the accommodation cavity. Both the first metal portion and the second metal portion are electrically connected to the body portion and protrude from the body portion along a first direction. Both the first metal portion and the second metal portion extend out of the housing. The body portion includes a first electrode plate, a second electrode plate, and a separator disposed between the first electrode plate and the second electrode plate. In the first direction, the first electrode plate overlaps with the second electrode plate or both edges of the second electrode plate exceed the first electrode plate. Along the first direction, the body portion includes a first protruding portion, a first portion, and a second protruding portion that are connected in sequence. The first protruding portion and the second protruding portion are respectively defined by two edges of the separator that are disposed opposite to each other in the first direction and corresponding edges of the second electrode plate. A thickness direction of the electrode assembly defined as a second direction, the second direction is perpendicular to the first direction. The first portion includes a first surface and a second surface disposed opposite to each other in the second direction. The first protruding portion includes a third surface located on a same side as the first surface and a fourth surface disposed opposite to the third surface. The second protruding portion includes a fifth surface located on the same side as the first surface and a sixth surface disposed opposite to the fifth surface. The first protruding portion includes a seventh surface in the first direction. In the second direction, the first metal portion is located in a middle position of the electrode assembly or closer to the fifth surface than the sixth surface. The first bonding part is configured to bond the first surface, the third surface, the seventh surface, the fourth surface, and the second surface. The second bonding part is configured to bond the first surface and the fifth surface but not to bond the sixth surface.

In this application, the first bonding part is bonded to the first surface, the third surface, the seventh surface, the fourth surface, and the second surface. This is equivalent to the effect of bonding different layers of separator at the first protruding portion of the body portion of the electrode assembly, thereby obstructing and suppressing the electrolytic solution from directly impacting the separator, and in turn, overcoming the voltage-drop-induced failure caused by the shrinkage of the innermost and outermost layers of separator of the body portion at the first protruding portion. In addition, the second bonding part is bonded to the first surface and the fifth surface but not bonded to the sixth surface. This is equivalent to the effect of bonding the outermost layer of separator of the body portion at the fifth surface, thereby not only preventing abrasion of the outermost layer of the first electrode plate near the fifth surface in the body portion, but also suppressing the electrolytic solution from impacting the separator, and in turn, overcoming the voltage-drop-induced failure caused by the shrinkage of the outermost layer of separator at the fifth surface in the body portion. Therefore, based on the shrinkage mechanism of the separator, this application disposes a first bonding part and a second bonding part at a position prone to shrinkage in the separator, thereby fundamentally and effectively overcoming the voltage-drop-induced failure caused by shrinkage of the separator during the dropping of the battery, and achieving a trade-off between the performance indicators such as the infiltration ability of the electrolytic solution and the energy density of the battery.

In an embodiment, the first bonding part bonds the first surface, the third surface, the seventh surface, the fourth surface, and the second surface in sequence.

In an embodiment, edges of the second bonding part do not exceed the edges of the separator.

In an embodiment, a third direction is defined perpendicular to the first direction and the second direction. In the third direction, a length of the body portion is W, a length of the first bonding part is W₁, a length of the second bonding part is W₂, and 0.7 W ≤ W₁ ≤ W and/or 0.7 W ≤ W₂ ≤ W. Further, 0.8 W ≤ W₁ ≤ 0.9 W and/or 0.8 W ≤ W₂ ≤ 0.9 W.

In an embodiment, a third direction is defined perpendicular to the first direction and the second direction. As viewed from the second direction, the third surface includes a first arc surface region, a first region, and a second arc surface region that are sequentially connected in the third direction. The first bonding part is bonded to the first region and bonded to at least one of the first arc surface region or the second arc surface region.

In an embodiment, a third direction is defined perpendicular to the first direction and the second direction. As viewed from the second direction, the fifth surface includes a third arc surface region, a second region, and a fourth arc surface region sequentially connected in the third direction. The second bonding part is bonded to the second region and bonded to at least one of the third arc surface region or the fourth arc surface region.

In an embodiment, at least one first through-hole is made on a first part of the first bonding part and the first part of the first bonding part being a part bonded to the seventh surface.

In an embodiment, a diameter d₂ of the first through-hole is 0.5 mm to 2 mm, and/or a distance d₃ between adjacent first through-holes is 1 mm to 4 mm.

In an embodiment, at least one second through-hole is made on a second part of the first bonding part and is the second part of the first bonding part being a part bonded to the first surface, and a hole ratio per unit area of the second part of the first bonding part is less than a hole ratio per unit area of the first part of the first bonding part.

In an embodiment, at least one third through-hole is made on a third part of the first bonding part and is the third part of the first bonding part being a part bonded to the second surface, and a hole ratio per unit area of the third part of the first bonding part is less than a hole ratio per unit area of the first part of the first bonding part.

In an embodiment, at least one of a first part of the first bonding part and a second part of the first bonding part is provided without through holes; the first part of the first bonding part being a part bonded to the first surface and the second part of the first bonding part being a part bonded to the second surface.

In an embodiment, a third direction is defined perpendicular to the first direction and the second direction, and the first bonding part includes a plurality of first sub-bonding parts spaced apart in the third direction.

In an embodiment, the body portion is of a jelly-roll structure or a stacked structure.

In an embodiment, the first electrode plate includes a first current collector, and the first surface includes at least a part of a surface of the first current collector.

In an embodiment, the first electrode plate is a positive electrode plate.

In an embodiment, the housing is a packaging film of a multi-layer structure, and the packaging film includes a metal foil and polyolefin resin layers located on both sides of the metal foil.

In an embodiment, an eighth surface is disposed on the second protruding portion in the first direction. A fifth bonding part that sequentially bonds the fifth surface, the eighth surface, and the sixth surface. The fifth bonding part is absent on the body portion.

In an embodiment, a third bonding part is disposed between the housing and the electrode assembly. One side of the third bonding part is bonded to the housing, and the opposite side of the third bonding part is bonded to the first surface or the second surface.

This application further provides an electronic device. The electronic device includes the battery. The electronic device may be an electronic product such as a mobile phone, a camera, a notebook computer, an unmanned aerial vehicle, an electric vehicle, an electric bicycle, or an energy storage station.

### BRIEF DESCRIPTION OF DRAWINGS

FIG. 1 is a schematic diagram of an electronic device according to an embodiment of this application;
FIG. 2 is a three-dimensional diagram of a battery according to a first embodiment of this application;
FIG. 3 is a three-dimensional diagram of a battery according to a second embodiment of this application;
FIG. 4 is a three-dimensional diagram of an electrode assembly of a battery without a bonding part according to a first embodiment of this application;
FIG. 5 is a variation of FIG. 4;
FIG. 6 is a three-dimensional diagram of the electrode assembly shown in FIG. 4 and equipped with a bonding part;
FIG. 7 is a bird's-eye close-up view of the electrode assembly shown in FIG. 6;
FIG. 8 is a sectional view obtained by sectioning along a line A-A shown in FIG. 6;
FIG. 9 is a close-up view of a part D shown in FIG. 6;
FIG. 10 is a close-up view of a part E shown in FIG. 6;
FIG. 11 is a close-up view of a part F shown in FIG. 8;
FIG. 12 is a three-dimensional partial sectional view of an electrode assembly of a battery without a bonding part according to a second embodiment of this application;
FIG. 13 is a three-dimensional diagram of the electrode assembly shown in FIG. 12 and equipped with a bonding part;
FIG. 14 is a close-up view of a part G shown in FIG. 13;
FIG. 15 is a schematic front view of the electrode assembly shown in FIG. 6;
FIG. 16 is a schematic rear view of the electrode assembly shown in FIG. 6;
FIG. 17 is a schematic top view of the electrode assembly shown in FIG. 6;
FIG. 18 is a schematic bottom view of the electrode assembly shown in FIG. 6;
FIG. 19 is a variation of FIG. 15;
FIG. 20 is a variation of FIG. 16;
FIG. 21 is another variation of FIG. 15;
FIG. 22 is another variation of FIG. 16;
FIG. 23 is still another variation of FIG. 15;
FIG. 24 is still another variation of FIG. 16;
FIG. 25 is yet another variation of FIG. 15;
FIG. 26 is yet another variation of FIG. 16;
FIG. 27 is yet another variation of FIG. 15;
FIG. 28 is yet another variation of FIG. 16;
FIG. 29 is yet another variation of FIG. 15; and
FIG. 30 is yet another variation of FIG. 16.

### Reference numerals:

100-mobile phone; 10-power battery/pouch-type battery; 1-housing; 2-electrode assembly; 21-body portion; 211-first electrode plate; 2111-first current collector; 2113-first active material layer; 2115-first tab; 213-second electrode plate; 2131-second current collector; 2133-second active material layer; 2135-second tab; 215-separator; 221-first protruding portion; 223-first portion; 225-second protruding portion; 3-cover plate; 31-first metal portion; 33-second metal portion; 4-connecting piece; 51-first bonding part; 51a/51b-first sub-bonding part; 53-second bonding part; 55-third bonding part; 57-fourth bonding part; 61-first through-hole; 63-second through-hole; 65-third through-hole; 70-tab sealant; S1-first surface; S2-second surface; S3-third surface; S31-first arc surface region; S33-first region; S35-second arc surface region; S4-fourth surface; S5-fifth surface; S51-third arc surface region; S53-second region; S55-four arc surface region; S6-sixth surface; S7-seventh surface; S8-eighth surface; A-first direction; B-second direction; C-third direction; L-length of the body portion in the first direction; W-length of the body portion in the third direction; W₁-length of the first bonding part in the third direction; W₂-length of the second bonding part in the third direction; W₃-lengths of the first bonding part and the first sub-bonding part in the first direction; W₄-length of the second bonding part in the first direction; W₅-length of the fourth bonding part in the third direction; W₆-length of the fourth bonding part in the first direction; d₁-clearance between the first sub-bonding parts in the third direction; d₂-diameter of the first through-hole; d₃-distance between adjacent first through-holes; d₄-diameter of the second through-hole; d₅-distance between adjacent second through-holes; d₆-diameter of the third through-hole; d₇-distance between adjacent third through-holes; a-partial separator that does not exceed the edge of the second electrode plate; b-partial separator that exceeds the edge of the second electrode plate

### DETAILED DESCRIPTION OF EMBODIMENTS

To make the objectives, technical solutions, and beneficial effects of this application clearer, the following describes this application in further detail with reference to specific embodiments. It is hereby noted that the following implementations are merely further explanations of this application but not intended as a limitation on this application.

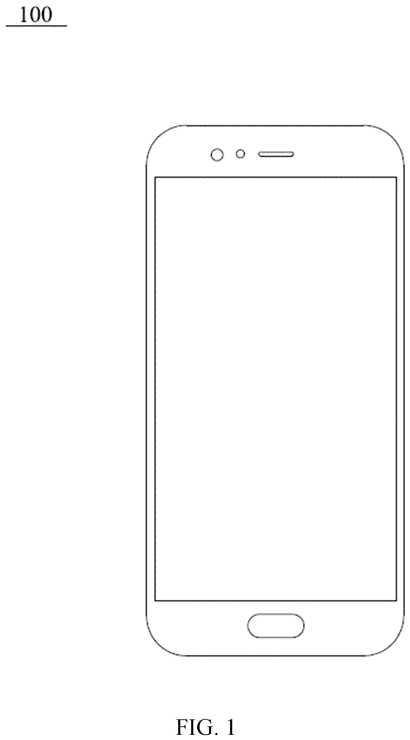

The battery according to this application mainly solves the problem of voltage-drop-induced failure caused by shrinkage of the separator during dropping of the battery. The battery not only fundamentally and effectively overcomes the voltage-drop-induced failure caused by shrinkage of the separator during dropping of the battery, but also achieves a trade-off between performance indicators such as the infiltration ability of the electrolytic solution and the energy density of the battery. Therefore, the battery can meet the use requirements of various electronic devices (such as the mobile phone 100 shown in FIG. 1). This application is applicable to various types of batteries, for example, applicable to hard-shell batteries in large electronic products such as unmanned aerial vehicles, power tools, and energy storage apparatuses, and applicable to pouch-type batteries in consumer electronic products such as mobile phones, cameras, and notebook computers.

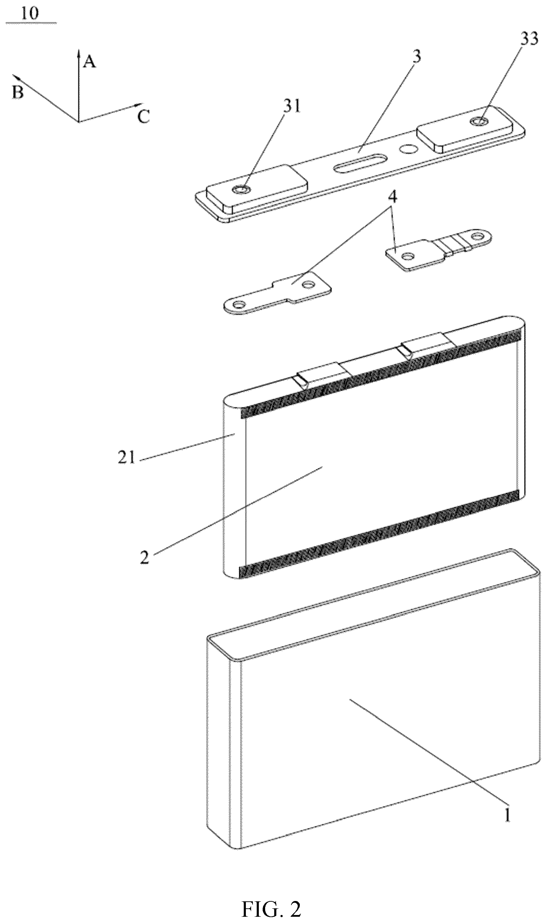

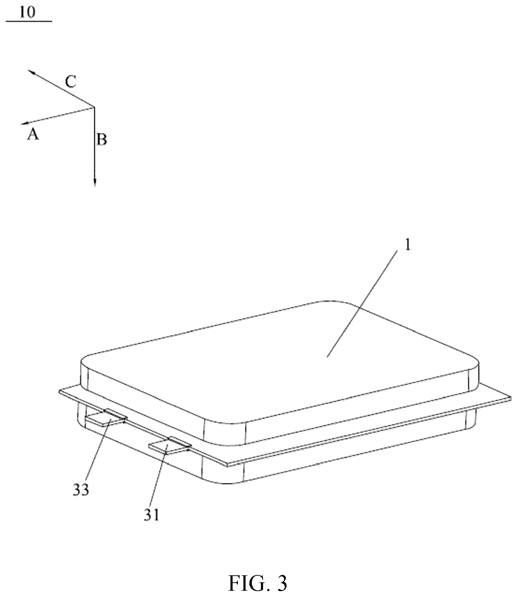

A hard-shell battery 10 generally includes a housing 1, an electrode assembly 2, and a cover plate 3 configured to seal the housing 1 (as shown in FIG. 2). The electrode assembly 2 includes a body portion 21, a first metal portion 31, and a second metal portion 33. The body portion 21 is accommodated in an accommodation cavity formed by the housing 1. Both the first metal portion 31 and the second metal portion 33 are disposed on the cover plate 3 and extend out of the housing 1. The first metal portion 31 and the second metal portion 33 are generally connected to the body portion 21 by a connecting piece 4. The housing 1 is generally made of metal aluminum, stainless steel, or magnesium alloy, and is molded by stretching a sheet material. A pouch-type battery 10 includes a housing 1 and an electrode assembly 2 (as shown in FIG. 3 to FIG. 5). The electrode assembly 2 includes a body portion 21, a first metal portion 31, and a second metal portion 33. The body portion 21 is accommodated in an accommodation cavity formed by the housing 1. The first metal portion 31 and the second metal portion 33 may be directly connected to the body portion 21 separately, or connected to the body portion 21 by an adapter strip. The hard-shell battery 10 differs from the pouch-type battery 10 primarily in the lengths of the housing 1 and the electrode assembly 2. The housing 1 of the hard-shell battery is generally an aluminum housing, a stainless steel housing, or a magnesium alloy housing. The housing 1 of the pouch-type battery is generally of a three-layer structure in which an intermediate layer is a metal foil flanked by polymer layers. The metal foil is made of aluminum, steel, titanium, alloy, or the like. The housing 1 of the pouch-type battery 10 is weaker than that of the hard-shell battery 10, and is more prone to shrink the separator during dropping. Therefore, in order to illustrate the technical effects of this application, the pouch-type battery 10 is used as an example for illustration.

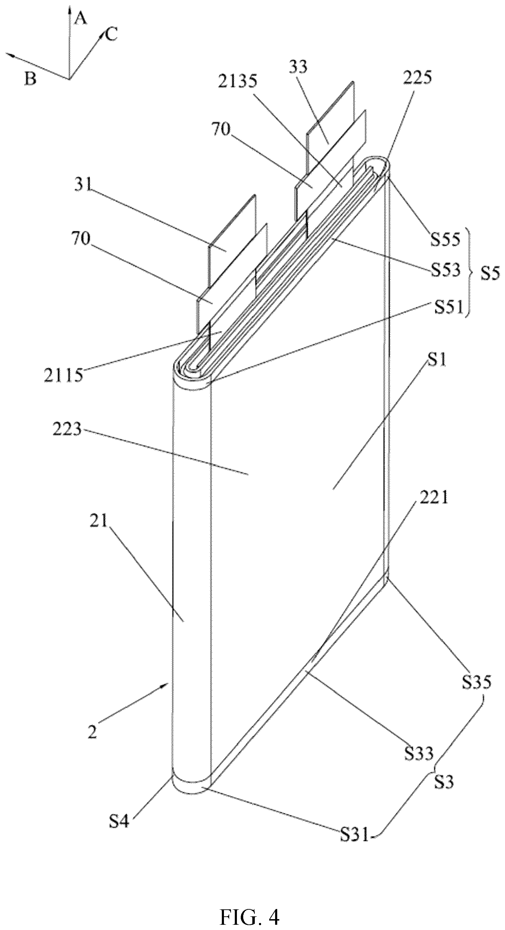

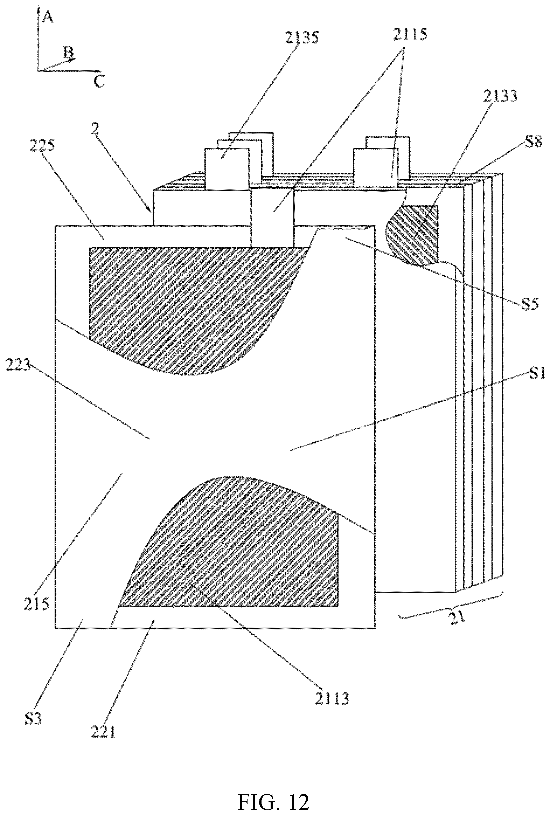

An electrode assembly 2 of the pouch-type battery 10 includes a body portion 21 formed of a first electrode plate 211, a second electrode plate 213, and a separator 215 disposed between the first electrode plate 211 and the second electrode plate 213. The body portion 21 may be of a jelly-roll structure shown in FIG. 4 to FIG. 7, or a stacked structure shown in FIG. 12 to FIG. 13. The jelly-roll structure is formed by stacking the first electrode plate 211, the separator 215, and the second electrode plate 213 in sequence and then winding the stacked plates. The stacked structure is formed by stacking a plurality of laminates, each laminate being formed by stacking the first electrode plate 211, the separator 215, and the second electrode plate 213 in sequence.

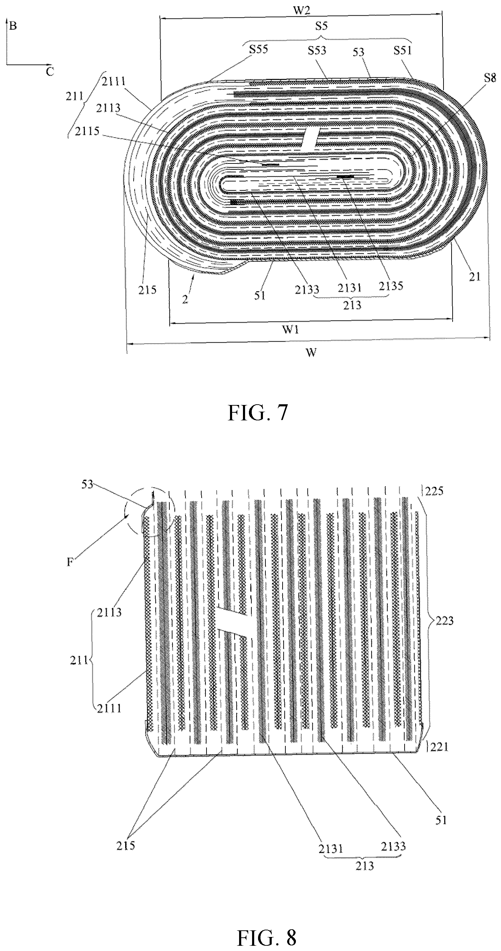

First, this application is described by using a pouch-type battery 10 of a jelly-roll structure as an example. As shown in FIG. 4 to FIG. 8, the first electrode plate 211 includes a first current collector 2111 and a first active material layer 2113 disposed on the first current collector 2111. A first tab 2115 is disposed at a winding start end of the first current collector 2111. The second electrode plate 213 includes a second current collector 2131 and a second active material layer 2133 disposed on the second current collector 2131. A second tab 2135 is disposed at a winding start end of the second current collector 2131. The first tab 2115 is welded to the first metal portion 31. A tab sealant 70 is disposed on the first metal portion 31. The first metal portion 31 protrudes from the body portion 21 along a first direction A and extends out of the housing 1. The second tab 2135 is welded to the second metal portion 33. The tab sealant 70 is disposed on the second metal portion 33. The second metal portion 33 protrudes from the body portion 21 along the first direction A and extends out of the housing 1. Further, as shown in FIG. 7, the first electrode plate ends with the first current collector 2111 at a winding termination end. Specifically, first, both sides of the first current collector 2111 of the first electrode plate 211 are coated with a first active material layer 2113. After the first electrode plate is wound for a plurality of circles, just a single side of the first current collector is coated with the first active material layer 2113. Subsequently, after being wound for one circle, the first electrode plate ends with the first current collector 2111 that is not coated with the first active material layer 2113. As shown in FIG. 8, along the first direction A, both edges of the second electrode plate 213 exceed the first electrode plate 211. The first electrode plate 211 may be a positive electrode plate or a negative electrode plate. Correspondingly, the second electrode plate 213 may be a negative electrode plate or a positive electrode plate.

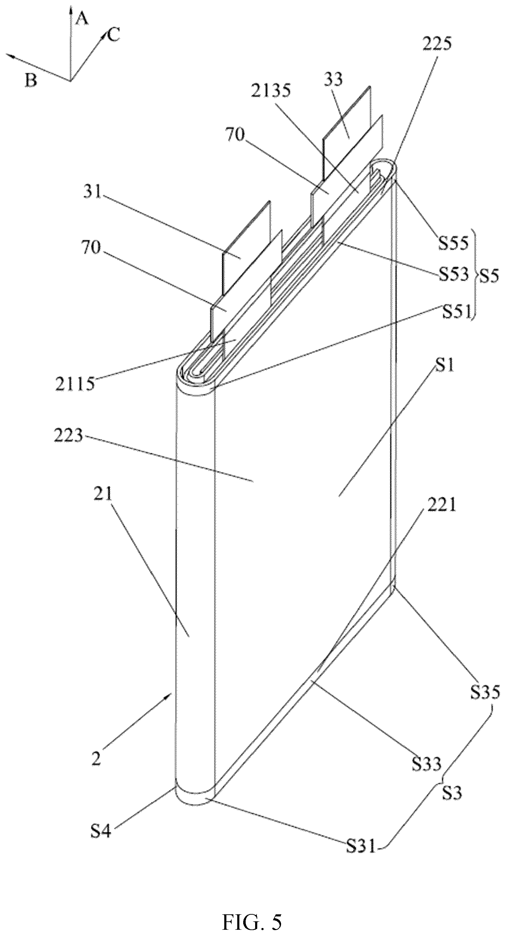

Still as shown in FIG. 4 to FIG. 8, a thickness direction of the electrode assembly 2 is defined as a second direction B. The second direction B is perpendicular to the first direction A. It is defined that the third direction C is perpendicular to the first direction A and the second direction B. Along the first direction A, the body portion 21 includes a first protruding portion 221, a first portion 223, and a second protruding portion 225 that are connected in sequence. The first protruding portion 221 and the second protruding portion 223 are respectively defined by two edges of the separator 215 that are disposed opposite to each other in the first direction A and corresponding edges of the second electrode plate 211. The first portion 223 includes a first surface S 1 and a second surface S2 disposed opposite to each other in the second direction B. The first surface S1 and the second surface S2 constitute a main surface of the body portion 21. The first protruding portion 221 includes a third surface S3 located on a same side as the first surface S1 and a fourth surface S4 disposed opposite to the third surface S3. The first protruding portion 221 includes a seventh surface S7 in the first direction A. The second protruding portion 225 includes a fifth surface S5 located on the same side as the first surface S1 and a sixth surface S6 disposed opposite to the fifth surface S5. The second protruding portion 225 includes an eighth surface S8 in the first direction A. In addition, as viewed from the second direction B, the third surface S3 includes a first arc surface region S31, a first region S33, and a second arc surface region S35 that are sequentially connected in the third direction C. The fifth surface S5 includes a third arc surface region S51, a second region S53, and a fourth arc surface region S55 that are sequentially connected in the third direction C. As shown in FIG. 4 and FIG. 6 to FIG. 7, in the second direction B, the first metal portion 31 is located in a middle position of the electrode assembly 2. Definitely, in the second direction B, the first metal portion 31 may be located close to the fifth surface S5 of the body portion 21 as shown in FIG. 5 rather than located in the middle position of the electrode assembly 2. The specific position of the first metal portion 31 may be determined as required by the battery terminal. In addition, as shown in FIG. 7, because the first electrode plate ends with the first current collector 2111 that is not coated with the first active material layer 2113, the first surface S1 includes at least a part of the surface of the first current collector 2111.

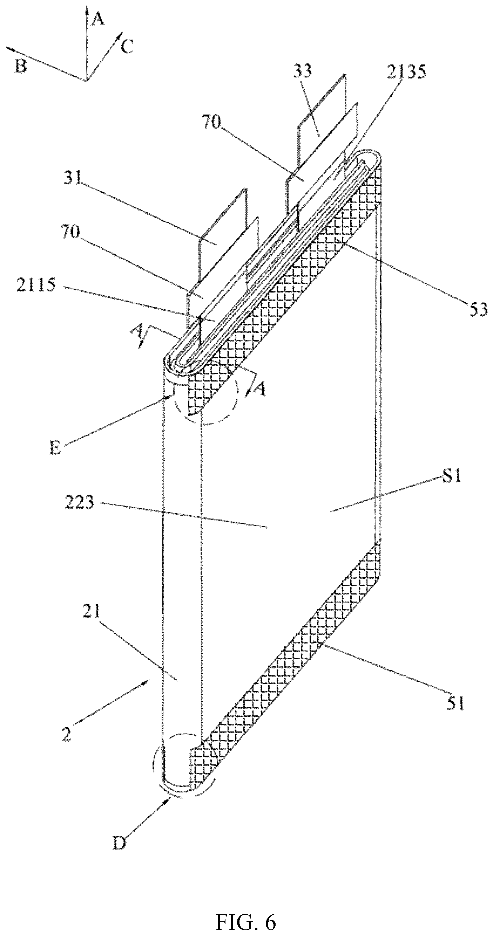

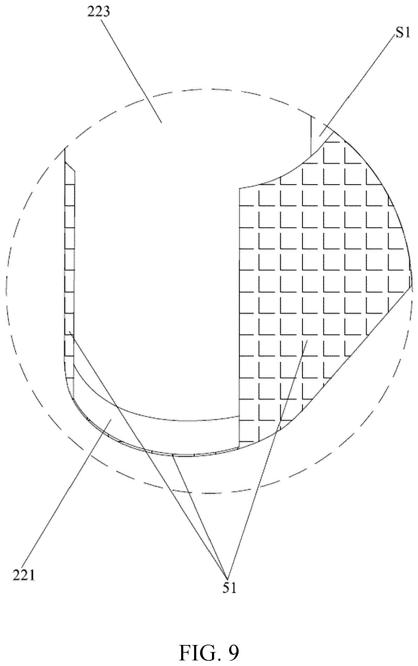

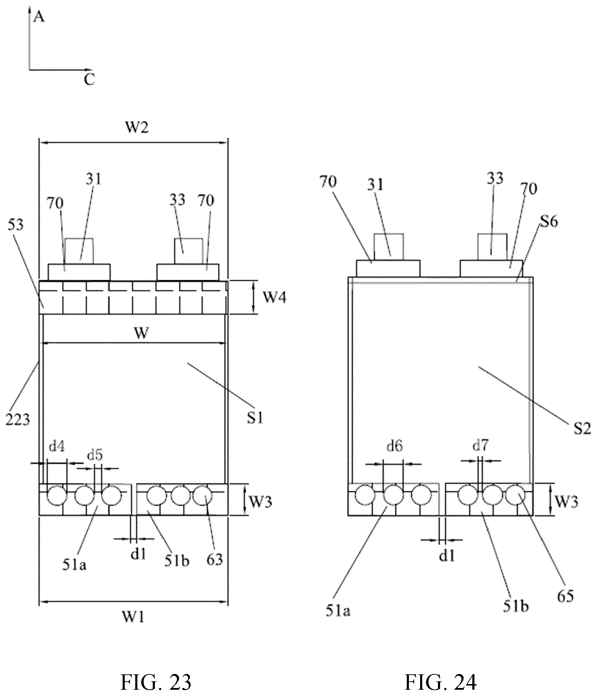

Further, as shown in FIG. 6 to FIG. 9 and FIG. 13 to FIG. 30, the first bonding part 51 is bonded to the first surface S1, the third surface S3, the seventh surface S7, the fourth surface S4, and the second surface S2. This is equivalent to the effect of bonding different layers of separator 215 at the first protruding portion 221 of the body portion 21, thereby obstructing and suppressing the electrolytic solution from directly impacting the separator 215, and in turn, overcoming the voltage-drop-induced failure caused by the shrinkage of the innermost and outermost layers of separator 215 of the body portion 21 at the first protruding portion 221. The second bonding part 53 is bonded to the first surface S1 and the fifth surface S5 but the second bonding part 53 is not bonded to the sixth surface S6. This is equivalent to the effect of bonding the outermost layer of separator 215 of the body portion 21 at the fifth surface S5, thereby not only preventing abrasion of the outermost layer of the first electrode plate 211 near the fifth surface S5 in the body portion 21, but also suppressing the electrolytic solution from impacting the separator 215, and in turn, overcoming the voltage-drop-induced failure caused by the shrinkage of the outermost layer of separator 215 at the fifth surface S5 in the body portion 21.

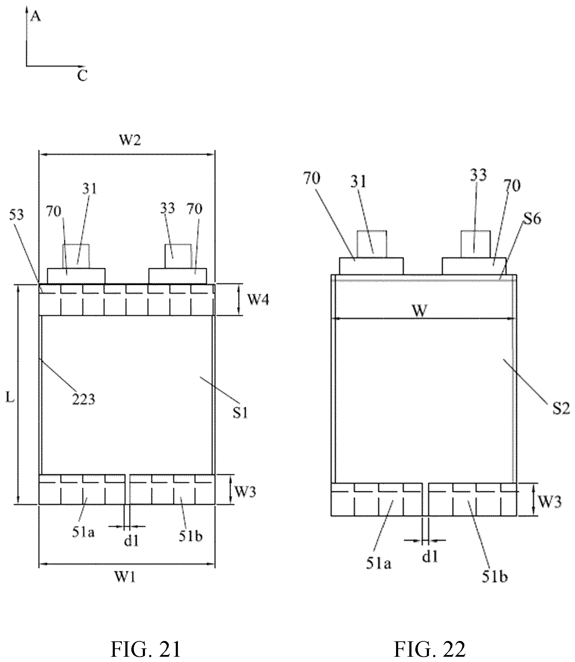

Based on the first bonding part 51, as shown in FIG. 7, a length of the first bonding part in the third direction C is defined as W₁, a length of the body portion 21 in the third direction C is defined as W, and the lengths satisfy 0.7 W ≤ W₁ < W. In this way, the contact size is appropriate between the first bonding part 51 and the separator 215 in the third direction C, thereby increasing the adhesivity between the first bonding part 51 and the separator 215, reducing the shrinkage proneness of the separator 215, and improving safety. Further, the lengths may be set to satisfy 0.8 W ≤ W₁ ≤ 0.9 W, thereby reducing the risk of inferior arrangement of the first bonding part 51 in the third direction C during manufacture of the electrode assembly 2 due to fluctuations of the manufacturing process while utilizing the good effect of bonding between the first bonding part 51 and the separator 215. The structure of the first bonding part may be shown in FIG. 6 to FIG. 9 and FIG. 15 to FIG. 17, in which the first bonding part bonds the first surface S1, the third surface S3, the seventh surface S7, the fourth surface S4, and the second surface S2 in sequence. Alternatively, as shown in FIG. 6, FIG. 7, and FIG. 9, the first bonding part is bonded to the first region S33 of the third surface S3 and bonded to at least one of the first arc surface region S31 or the second arc surface region S35. Alternatively, as shown in FIG. 21 to FIG. 24, the first bonding part 51 includes two first sub-bonding parts, such as a first sub-bonding part 51a and a first sub-bonding part 51b, spaced apart in the third direction C. In addition, a clearance d₁ between the first sub-bonding part 51a and the first sub-bonding part 51b in the third direction C is 0 mm to 4 mm, thereby achieving an appropriate clearance between the first sub-bonding part 51a and the first sub-bonding part 51b in the third direction C as well as a good effect of bonding to the separator 215. Both the first sub-bonding part 51a and the first sub-bonding part 51b bond the first surface S1, the third surface S3, the seventh surface S7, the fourth surface S4, and the second surface S2 in sequence. Definitely, the number of first sub-bonding parts may be three, four, or at least two. The length W₃ of the first bonding part 51, the first sub-bonding part 51a, and the first sub-bonding part 51b in the first direction A is set to be 8 mm to 12 mm, thereby achieving a good effect of bonding between the first sub-bonding part 51a/first sub-bonding part 51b and the electrode assembly 2, maintaining high firmness of the bonding, reducing the risk of detachment during manufacture or use, and reducing interference caused onto the length of the pouch-type battery 10 in the second direction B.

The first bonding part 51 may be single-layer adhesive tape or laminated multi-layer adhesive tape to ensure high adhesivity. When the first bonding part is laminated multi-layer adhesive tape, the through-holes need to be in one-to-one correspondence to ensure sufficient infiltration ability of the electrolytic solution. In addition, the first bonding part 51 is usually adhesive tape that includes a substrate and a bonding layer. The substrate is generally one or more of polyethylene terephthalate (PET), oriented polypropylene (PP), or polyimide (PI). The bonding layer is generally made of polymer materials such as acrylic resin, thermoset polyurethane, organic silicone, natural rubber, and synthetic rubber that are swellable in an organic solvent in the electrolytic solution.

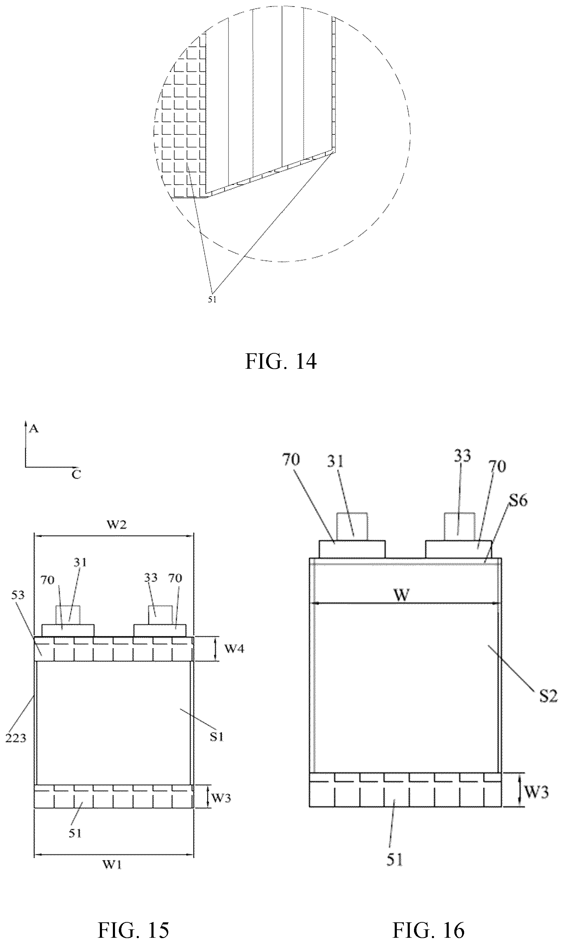

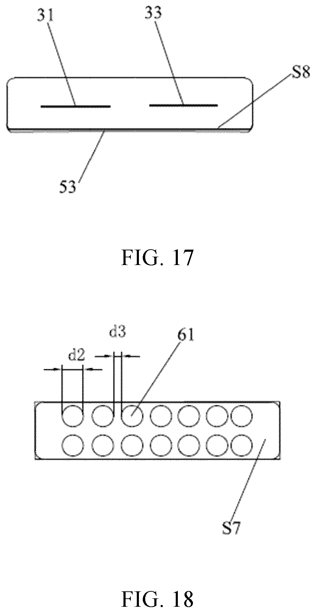

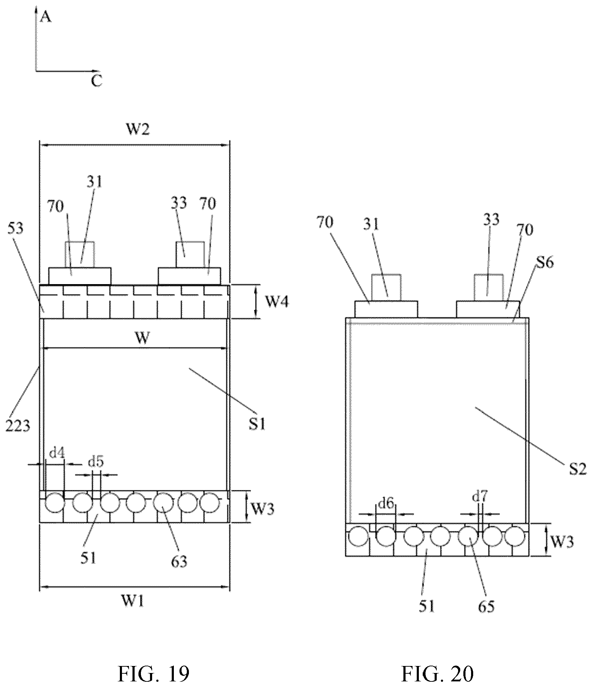

Further, it is hereby noted that, as shown in FIG. 18, at least one first through-hole 61 is made on a first part of the first bonding part 51 and the first part of the first bonding part being a part bonded to the seventh surface S7. The first through-hole 61 improves the infiltration ability of the electrolytic solution. A diameter d₂ of the first through-hole 61 is 0.5 mm to 2 mm, and/or a distance d₃ between adjacent first through-holes 61 is 1 mm to 4 mm. In this way, the battery 10 achieves a good effect of infiltration by the electrolytic solution and high performance of bonding the separator 215. Further, as shown in FIG. 19, FIG. 23, and FIG. 29, at least one second through-hole 63 is made on a part that is of the first bonding part 51 and that is bonded to the first surface S1. In addition, a diameter d₄ of the second through-hole 63 is 0.5 mm to 2 mm, and/or a distance d₅ between adjacent second through-holes 63 is 1 mm to 4 mm, thereby maintaining high adhesivity between the first bonding part 51 and the first surface S1 and increasing the storage amount of the electrolytic solution through the second through-holes 63. A hole ratio per unit area of the part that is of the first bonding part 51 and that is bonded to the first surface S1 is less than a hole ratio per unit area of the part that is of the first bonding part 51 and that is bonded to the seventh surface S7 (the area of an outline of a bonding part between the first bonding part 51 and each surface is S, a sum of areas of the through-holes in the bonding part is Sₘ, and therefore, the hole ratio per unit area = Sₘ/S × 100%. Using FIG. 19 as an example, the hole ratio per unit area of the bonding part between the first bonding part 51 and the first surface S1 is equal to 7πd₄²/4W₁W₃). Further, as shown in FIG. 20, FIG. 24, and FIG. 30, at least one third through-hole 65 is made on a part that is of the first bonding part 51 and that is bonded to the second surface S2. A diameter d₆ of the third through-hole 65 is 0.5 mm to 2 mm, and/or a distance d₇ between adjacent third through-holes 65 is 1 mm to 4 mm. A hole ratio per unit area of the part that is of the first bonding part 51 and that is bonded to the second surface S2 is less than a hole ratio per unit area of the part that is of the first bonding part 51 and that is bonded to the seventh surface S7. Alternatively, as shown in FIG. 15 to FIG. 16, FIG. 21 to FIG. 22, and FIG. 25 to FIG. 28, through-holes are absent on at least one of the part that is of the first bonding part 51 and that is bonded to the first surface S1 or the part that is of the first bonding part 51 and that is bonded to the second surface S2. On the one hand, the absence of through-holes on the main surface of the body portion 21 facilitates a tape applicator to adsorb two ends of the first bonding part 51 to mount the first bonding part during the manufacture. On the other hand, the absence prevents free electrolytic solution from passing through the through-holes on the main surface to result in swelling of the polymer material in the bonding layer of the first bonding part 51. The swelling causes the bonding layer to overflow from the edge of the through-holes. Consequently, when the bonding layer is pressurized during battery manufacture or when the pressure increases in subsequent use, the overflowing bonding layer is bonded to the main surface of the body portion 21 and the housing 1. During mechanical abuse (such as dropping), the housing 1 pulls the main surface of the body portion 21 and generates a relatively large acting force to tear the main surface. When the main surface of the body portion 21 is a positive current collector that is not coated with an active material, the tearing may cause a short circuit due to contact with the active material layer.

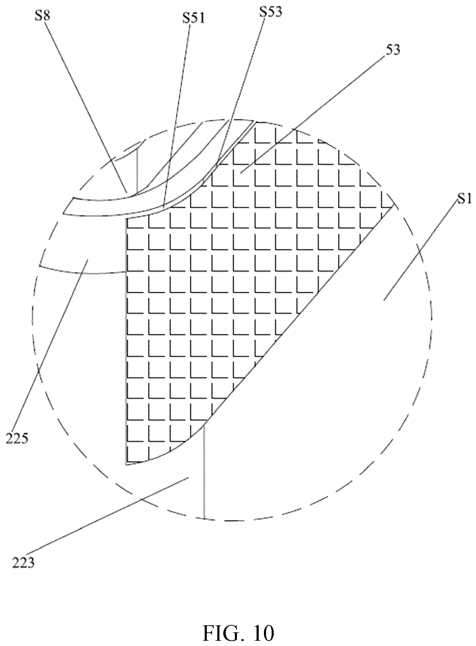

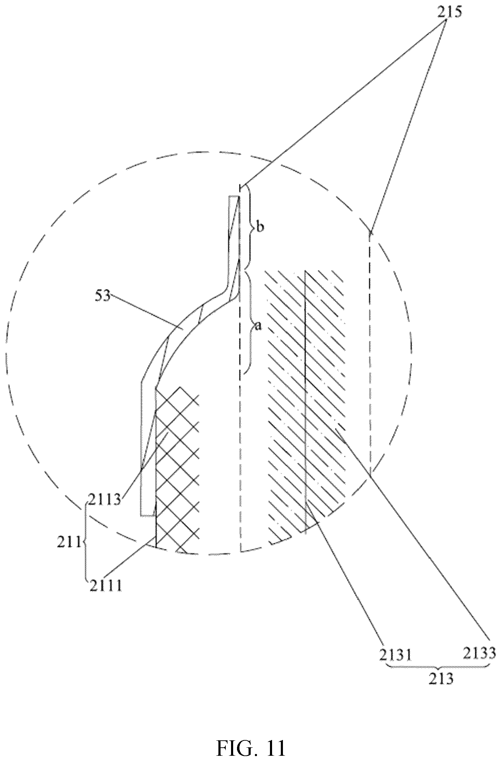

Based on the second bonding part 53, as shown in FIG. 7, a length of the second bonding part in the third direction C is defined as W₂, a length of the body portion 21 in the third direction C is W, and the lengths satisfy 0.7 W ≤ W₂ ≤ W. In this way, the contact size is appropriate between the second bonding part 53 and the separator 215 in the third direction C, thereby increasing the adhesivity between the second bonding part 53 and the separator 215, reducing the shrinkage proneness of the separator 215, and improving safety. Further, the lengths satisfy 0.8 W ≤ W₂ ≤ 0.9 W, thereby reducing the risk of inferior arrangement of the second bonding part 53 in the third direction C during manufacture of the electrode assembly 2 due to fluctuations of the manufacturing process while utilizing the good effect of bonding between the second bonding part 53 and the separator 215. The second bonding part may be of a structure shown in FIG. 6, FIG. 8, and FIG. 10 to FIG. 11. In the first direction A, the edge of the second bonding part 53 does not exceed the edge of the separator 215. That is, a part of the fifth surface S5 may be exposed in the first direction A. Further, with reference to FIG. 6 to FIG. 8 and FIG. 11, the first current collector 2111 that is not coated with the first active material layer 2113 serves as a winding termination end. The second bonding part 53 may be sequentially bonded to the first current collector 2111, the partial separator (part a in FIG. 11) that does not exceed the edge of the second electrode plate 213, and the partial separator (part b in FIG. 11) that exceeds the edge of the second electrode plate 213. The surface that is of the first current collector 2111 in the outermost circle of the jelly-roll structure and that is oriented toward the first bonding part 53 is not coated with the first active material layer 2113. Therefore, the thickness of the first active material layer 2113 that does not contribute to capacity enhancement is reduced, and the energy density is increased. In addition, the first electrode plate 211 serves as a positive electrode plate, the second electrode plate 213 serves as a negative electrode plate, and the second bonding part 53 may be bonded, in the first direction A, to the partial separator that does not exceed the edge of the second electrode plate 213 (negative electrode plate), thereby avoiding a short circuit caused by the contact between the negative electrode plate and the positive current collector when the separator 215 shrinks, and preventing shrinkage more effectively. In the first direction A, the length of the second bonding part 53 is W₄, and satisfies 5 mm ≤ W₄ ≤ 20 mm. The parameter falling within this range can not only protect the outermost layer of separator 315, but also prevent occupation of much space. Alternatively, as shown in FIG. 6 and FIG. 10, the second bonding part 53 may be bonded to the second region S53 of the fifth surface S5 and bonded to at least one of the third arc surface region S51 or the fourth arc surface region S55. The second bonding part 53 may be single-layer adhesive tape or laminated multi-layer adhesive tape to ensure high adhesivity.

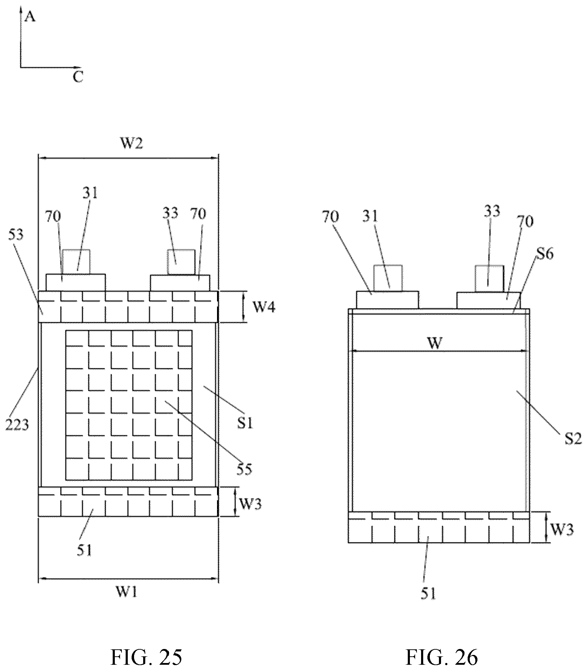

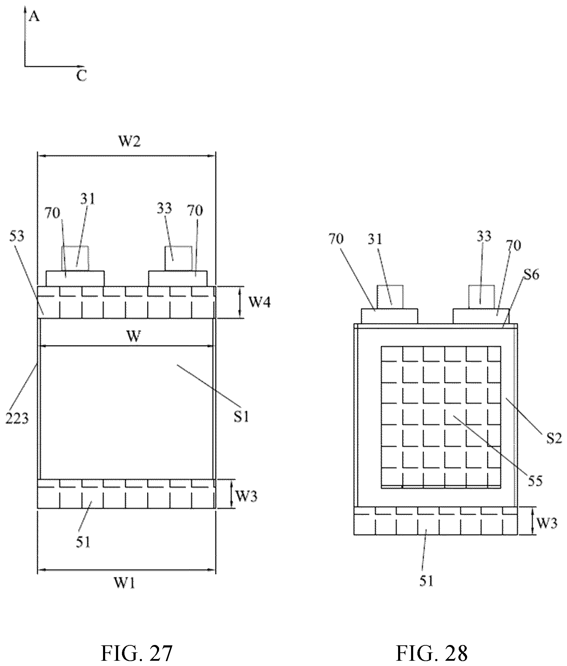

Further, as shown in FIG. 25 to FIG. 28, a third bonding part 55 is disposed between the housing 1 and the electrode assembly 2. One side of the third bonding part 55 is bonded to the housing 1, and the opposite side of the third bonding part is bonded to the first surface S1 (as shown in FIG. 25) or the second surface S2 (as shown in FIG. 28). On the side of the electrode assembly 2 on which the third bonding part 55 is not disposed, the separator also shrinks during mechanical abuse due to relative movement between the housing 1 and the electrode assembly 2. The problem of separator shrinkage caused by such mechanical abuse can be solved by bonding the first bonding part 51 to the first surface S1, the third surface S3, the seventh surface S7, the fourth surface S4, and the second surface S2, and by bonding the second bonding part 53 to the first surface S1 and the fifth surface S5.

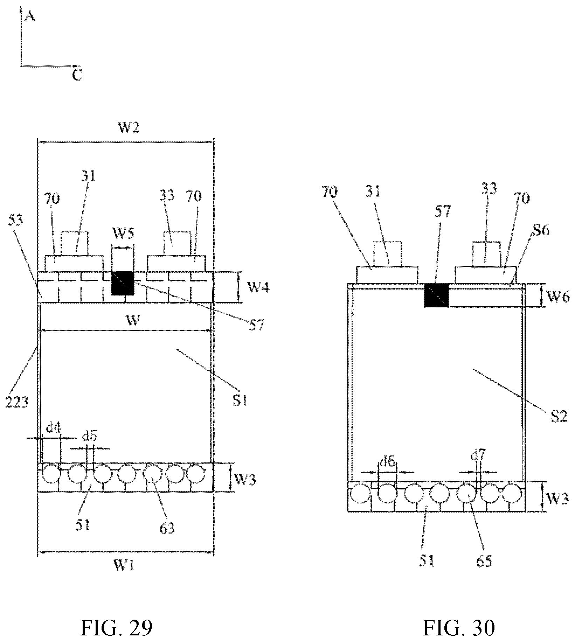

Still further, as shown in FIG. 29 to FIG. 30, a fourth bonding part 57 is disposed between the first metal portion 31 and the second metal portion 33 in the body portion 21. The fourth bonding part 57 is bonded to the first surface S1, the fifth surface S5, the eighth surface S8, the sixth surface S6, and the second surface S2 in sequence. A length W₅ of the fourth bonding part 57 in the third direction C is 5 mm to 20 mm, and a length W₆ of the fourth bonding part in the first direction A is 6 mm to 12 mm. Definitely, when the distance between the first metal portion 31 and the second metal portion 33 is relatively small, the fourth bonding part 57 that bonds the fifth surface S5, the eighth surface S8, and the sixth surface S6 in sequence may be absent on the body portion 21, as shown in FIG. 15 to FIG. 28. The fourth bonding part 57 may be single-layer adhesive tape or laminated multi-layer adhesive tape to ensure high adhesivity.

Next, this application is described by using a pouch-type battery 10 of a stacked structure as an example. Referring to FIG. 3 and FIG. 12 to FIG. 13, the first electrode plate 211 and the second electrode plate 213 each are coated with the separator 215. The first electrode plate 211 includes a first current collector 2111 and a first active material layer 2113 disposed on the first current collector 2111. The first active material layer 2113 fully covers the first current collector 2111, and the first current collector 2111 is connected to a first tab 2115. The second electrode plate 213 includes a second current collector 2131 and a second active material layer 2133 disposed on the second current collector 2131. The second active material layer 2133 fully covers the second current collector 2131, and the second current collector 2131 is connected to a second tab 2135. A plurality of first tabs 2115 are stacked and then welded to the first metal portion 31. The first metal portion 31 protrudes from the body portion 21 along the first direction A and extends out of the housing 1. A plurality of second tabs 2135 are stacked and then welded to the second metal portion 33. The second metal portion 33 protrudes from the body portion 21 along the first direction A and extends out of the housing 1.

Still as shown in FIG. 3 and FIG. 12 to FIG. 13, along the first direction A, the body portion 21 includes a first protruding portion 221, a first portion 223, and a second protruding portion 225 that are connected in sequence. The first protruding portion 221 and the second protruding portion 223 are respectively defined by two edges of the separator 215 that are disposed opposite to each other in the first direction A and corresponding edge of the second electrode plate 213. The first portion 223 includes a first surface S1 and a second surface S2 disposed opposite to each other in the second direction B. The first protruding portion 221 includes a third surface S3 located on a same side as the first surface S1 and a fourth surface S4 disposed opposite to the third surface S3. The first protruding portion 221 includes a seventh surface S7 in the first direction A. The second protruding portion 225 includes a fifth surface S5 located on the same side as the first surface S1 and a sixth surface S6 disposed opposite to the fifth surface S5. The second protruding portion 225 includes an eighth surface S8 in the first direction A. In the second direction B, the first metal portion 31 is located in a middle position of the electrode assembly 2.

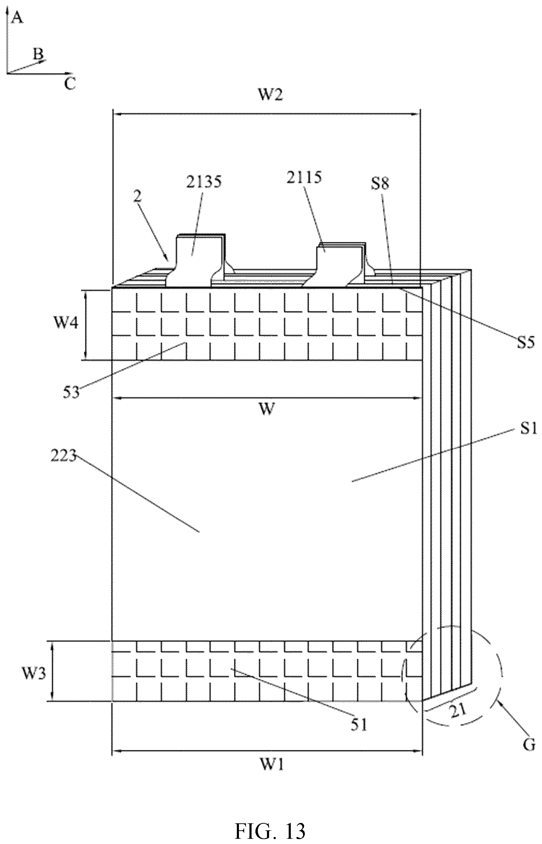

Further, as shown in FIG. 13 to FIG. 14, the first bonding part 51 is bonded to the first surface S1, the third surface S3, the seventh surface S7, the fourth surface S4, and the second surface S2. This is equivalent to the effect of bonding different layers of separator 215 at the first protruding portion 221 of the body portion 21, thereby obstructing and suppressing the electrolytic solution from directly impacting the separator 215, and in turn, overcoming the voltage-drop-induced failure caused by the shrinkage of the innermost and outermost layers of separator 215 of the body portion 21 at the first protruding portion 221. The second bonding part 53 is bonded to the first surface S1 and the fifth surface S5 but the second bonding part 53 is not bonded to the sixth surface S6. This is equivalent to the effect of bonding the outermost layer of separator 215 of the body portion 21 at the fifth surface S5, thereby not only preventing abrasion of the outermost layer of the first electrode plate 211 near the fifth surface S5 in the body portion 21, but also suppressing the electrolytic solution from impacting the separator 215, and in turn, overcoming the voltage-drop-induced failure caused by the shrinkage of the outermost layer of separator 215 at the fifth surface S5 in the body portion 21. For a battery of a stacked structure, the innermost layer and the outermost layer are defined depending on the position of the first metal portion 31 in the second direction B. If the first metal portion 31 is located in the middle position of the electrode assembly 2 in the second direction B, the outermost layer tends to be located on the side of the positive electrode plate. If the first metal portion 31 is not located in the middle position of the electrode assembly 2 in the second direction B, the outermost layer tends to be located on the side of the fifth surface.

Based on the first bonding part 51, a length of the first bonding part in the third direction C is defined as W₁, a length of the body portion 21 in the third direction C is defined as W, and the lengths satisfy 0.7 W ≤ W₁ ≤ W. Further, the lengths satisfy 0.8 W ≤ W₁ ≤ 0.9 W. For example, as shown in the drawing, W₁ = W. The structure of the first bonding part may be shown in FIG. 13 to FIG. 14, in which the first bonding part bonds the first surface S1, the third surface S3, the seventh surface S7, the fourth surface S4, and the second surface S2 in sequence. A length W₃ of the first bonding part 51 in the first direction A is 8 mm to 12 mm. Similar to the circumstance of a pouch-type battery, for a battery of a stacked structure, through-holes may be disposed on at least one of the part that is of the first bonding part 51 and that is bonded to the seventh surface S7, the part that is of the first bonding part 51 and that is bonded to the first surface S1, or the part that is of the first bonding part 51 and that is bonded to the second surface S2, or may be absent on all such parts. The first bonding part 51 may be single-layer adhesive tape or laminated multi-layer adhesive tape to ensure high adhesivity.

Based on the second bonding part 53, a length of the second bonding part in the third direction C is defined as W₂, a length of the body portion 21 in the third direction C is W, and the lengths satisfy 0.7 W ≤ W₂ ≤ W. Further, the lengths satisfy 0.8 W ≤ W₂ ≤ 0.9 W. For example, as shown in the drawing, W₂ = W. In the first direction A, the length of the second bonding part is W₄, and satisfies 5 mm ≤ W₄ ≤ 20 mm. The parameter falling within this range can not only protect the outermost layer of separator 315, but also prevent occupation of much space. The second bonding part may be of a structure shown in FIG. 13. In the first direction A, the edge of the second bonding part does not exceed the edge of the separator 215. That is, a part of the fifth surface S5 may be exposed in the first direction A. The second bonding part 53 may be single-layer adhesive tape or laminated multi-layer adhesive tape to ensure high adhesivity.

To further illustrate how the battery according to this application can effectively solve a voltage-drop-induced failure caused by shrinkage of the separator during dropping of the battery, the following gives a detailed description of embodiments of a pouch-type battery. Embodiments 1 to 3 employ electrode assemblies of structures shown in FIG. 21 to FIG. 22, and Comparative Embodiments 1 to 3 employ conventional electrode assemblies (the first bonding part 51 bonds the first surface S1, the third surface S3, the seventh surface S7, the fourth surface S4, and the second surface S2 in sequence; and the second bonding part 51 bonds the first surface S1, the fifth surface S5, the eighth surface S8, the sixth surface S6, and the second surface S2 in sequence).

### Embodiment 1

A length L of a body portion 21 in a first direction A is 91 mm, a length of the body portion in a second direction B is 6 mm, and a length W of the body portion in a third direction C is 66 mm. A first bonding part 51 includes 1 first sub-bonding part 51a and 1 first sub-bonding part 51b, and is symmetrically distributed with respect to a center line in between. The length W₃ of the first sub-bonding part 51a and the first sub-bonding part 51b in the first direction A is 12 mm. A clearance d₁ between the first sub-bonding part 51a and the first sub-bonding part 51b is 3 mm. A first through-hole 61 is made on a bonding part that bonds the first sub-bonding part 51a and the first sub-bonding part 51b to a seventh surface S7. A diameter d₂ of the first through-hole 61 is 1 mm. A distance d₃ between adjacent first through-holes 61 is 1.5 mm. A length W₂ of a second bonding part 53 in the third direction C is 66 mm, a length W₄ of the second bonding part in the first direction A is 8 mm, and a length of the second bonding part in the second direction B is 20 µm.

### Comparative Embodiment 1

A length L of a body portion 21 in a first direction A is 91 mm, a length of the body portion in a second direction B is 6 mm, and a length W of the body portion in a third direction C is 66 mm. A first bonding part 51 includes 1 first sub-bonding part 51a and 1 first sub-bonding part 51b, and is symmetrically distributed with respect to a center line in between. The length W₃ of the first sub-bonding part 51a and the first sub-bonding part 51b in the first direction A is 12 mm. A clearance d₁ between the first sub-bonding part 51a and the first sub-bonding part 51b is 3 mm. A first through-hole 61 is made on a bonding part that bonds the first sub-bonding part 51a and the first sub-bonding part 51b to a seventh surface S7. A diameter d₂ of the first through-hole 61 is 1 mm. A distance d₃ between adjacent first through-holes 61 is 1.5 mm. A length W₂ of a second bonding part 53 in the third direction C is 13 mm, a length W₄ of the second bonding part in the first direction A is 8 mm, and a length of the second bonding part in the second direction B is 20 µm.

### Embodiment 2

A length L of a body portion 21 in a first direction A is 78 mm, a length of the body portion in a second direction B is 5.4 mm, and a length W of the body portion in a third direction C is 65 mm. A first bonding part 51 includes 1 first sub-bonding part 51a and 1 first sub-bonding part 51b, and is symmetrically distributed with respect to a center line in between. The length W₃ of the first sub-bonding part 51a and the first sub-bonding part 51b in the first direction A is 12.3 mm. A clearance d₁ between the first sub-bonding part 51a and the first sub-bonding part 51b is 3 mm. A first through-hole 61 is made on a bonding part that bonds the first sub-bonding part 51a and the first sub-bonding part 51b to a seventh surface S7. A diameter d₂ of the first through-hole 61 is 1 mm. A distance d₃ between adjacent first through-holes 61 is 1.5 mm. A length W₂ of a second bonding part 53 in the third direction C is 65 mm, a length W₄ of the second bonding part in the first direction A is 8 mm, and a length of the second bonding part in the second direction B is 20 µm.

### Comparative Embodiment 2

A length L of a body portion 21 in a first direction A is 78 mm, a length of the body portion in a second direction B is 5.4 mm, and a length W of the body portion in a third direction C is 65 mm. A first bonding part 51 includes 1 first sub-bonding part 51a and 1 first sub-bonding part 51b, and is symmetrically distributed with respect to a center line in between. The length W₃ of the first sub-bonding part 51a and the first sub-bonding part 51b in the first direction A is 12 mm. A clearance d₁ between the first sub-bonding part 51a and the first sub-bonding part 51b is 3 mm. A first through-hole 61 is made on a bonding part that bonds the first sub-bonding part 51a and the first sub-bonding part 51b to a seventh surface S7. A diameter d₂ of the first through-hole 61 is 1 mm. A distance d₃ between adjacent first through-holes 61 is 1.5 mm. A length W₂ of a second bonding part 53 in the third direction C is 13 mm, a length W₄ of the second bonding part in the first direction A is 8 mm, and a length of the second bonding part in the second direction B is 20 µm.

### Embodiment 3

A length L of a body portion 21 in a first direction A is 85 mm, a length of the body portion in a second direction B is 4.9 mm, and a length W of the body portion in a third direction C is 63 mm. A first bonding part 51 includes 1 first sub-bonding part 51a and 1 first sub-bonding part 51b, and is symmetrically distributed with respect to a center line in between. The length W₃ of the first sub-bonding part 51a and the first sub-bonding part 51b in the first direction A is 12.5 mm. A clearance d₁ between the first sub-bonding part 51a and the first sub-bonding part 51b is 3 mm. A first through-hole 61 is made on a bonding part that bonds the first sub-bonding part 51a and the first sub-bonding part 51b to a seventh surface S7. A diameter d₂ of the first through-hole 61 is 1 mm. A distance d₃ between adjacent first through-holes 61 is 1.5 mm. A length W₂ of a second bonding part 53 in the third direction C is 63 mm, a length W₄ of the second bonding part in the first direction A is 8 mm, and a length of the second bonding part in the second direction B is 20 µm.

### Comparative Embodiment 3

A length L of a body portion 21 in a first direction A is 85 mm, a length of the body portion in a second direction B is 4.9 mm, and a length W of the body portion in a third direction C is 63 mm. A first bonding part 51 includes 1 first sub-bonding part 51a and 1 first sub-bonding part 51b, and is symmetrically distributed with respect to a center line in between. The length W₃ of the first sub-bonding part 51a and the first sub-bonding part 51b in the first direction A is 12.5 mm. A clearance d₁ between the first sub-bonding part 51a and the first sub-bonding part 51b is 3 mm. A first through-hole 61 is made on a bonding part that bonds the first sub-bonding part 51a and the first sub-bonding part 51b to a seventh surface S7. A diameter d₂ of the first through-hole 61 is 1 mm. A distance d₃ between adjacent first through-holes 61 is 1.5 mm. A length W₂ of a second bonding part 53 in the third direction C is 13 mm, a length W₄ of the second bonding part in the first direction A is 8 mm, and a length of the second bonding part in the second direction B is 20 µm.

The batteries in Embodiments 1 to 3 and Comparative Embodiments 1 to 3 are subjected to a drop test under the following conditions. The test results are shown in Table 1.

A drop test process includes the following steps:
1) Putting a battery into a special-purpose jig;
2) Freely dropping the battery from a height of 1.8 meters to a surface of a steel sheet, and repeat the drop for 3 rounds;
3) Measuring and recording the voltage of the battery upon completion of each round of test, checking the appearance of the battery, and stopping the drop if the battery leaks electrolyte or catches fire; and
4) Disassembling the electrode assembly upon completion of the drop, and determining a voltage-drop-induced failure percentage, the number of shrunk positions on the separator, and a shrinkage percentage.

**Table 1 Drop test results of embodiments and comparative embodiments**

| Group | Voltage-drop-induced failure (> 50 mV) | Percentage of electrode assemblies with shrunk separator | Number of shrunk positions on separator |
|---|---|---|---|
| Embodiment 1 | 0/10 | 2/10 | 2 |
| Comparative Embodiment 1 | 7/10 | 10/10 | 48 |
| Embodiment 2 | 0/10 | 1/10 | 3 |
| Comparative Embodiment 2 | 6/10 | 9/10 | 41 |
| Embodiment 3 | 0/10 | 2/10 | 5 |
| Comparative Embodiment 3 | 8/10 | 10/10 | 52 |

As can be seen from the results in Table 1, the first bonding part is bonded to the first surface, the third surface, the seventh surface, the fourth surface, and the second surface of the body portion, and the second bonding part is bonded to the first surface and the fifth surface but not bonded to the sixth surface. In this way, the arrangement of the two bonding parts fundamentally and effectively has overcome the voltage-drop-induced failure caused by shrinkage of the separator during dropping of the battery, and has achieved a trade-off between performance indicators such as infiltration ability of the electrolytic solution and energy density of the battery.

Finally, it is hereby noted that the foregoing embodiments are merely intended for describing the technical solutions of this application but not intended as a limitation on the protection scope of this application. Although this application is described in detail with reference to preferred embodiments, this application is not limited to what is enumerated in the embodiments. A person of ordinary skill in the art understands that modifications or equivalent replacements may be made to the technical solutions of this application without departing from the essence and scope of the technical solutions of this application.

## Claims

1. A battery, **characterized in that**, the battery comprises:
a housing configured to form an accommodation cavity;
an electrode assembly, comprising a body portion, a first metal portion, a second metal portion, a first bonding part and a second bonding part;
wherein, the body portion is accommodated in the accommodation cavity, the body portion comprises a first electrode plate, a second electrode plate, and a separator disposed between the first electrode plate and the second electrode plate;
in the first direction, the first electrode plate overlaps with the second electrode plate, or, both edges of the second electrode plate exceed the first electrode plate;
along the first direction, the body portion comprises a first protruding portion, a first portion, and a second protruding portion connected in sequence; the first protruding portion and the second protruding portion are respectively defined by two edges of the separator disposed opposite to each other in the first direction and corresponding edges of the second electrode plate;
a thickness direction of the electrode assembly is defined as a second direction, the second direction is perpendicular to the first direction;
the first portion comprises a first surface and a second surface disposed opposite to each other in the second direction;
the first protruding portion comprises a third surface located on a same side as the first surface and a fourth surface disposed opposite to the third surface;
the second protruding portion comprises a fifth surface located on the same side as the first surface and a sixth surface disposed opposite to the fifth surface;
the first protruding portion comprises a seventh surface in the first direction;
the first metal portion is electrically connected to the body portion and protrudes from the body portion along a first direction; the first metal portion extends out of the housing; in the second direction, the first metal portion is located in a middle position of the electrode assembly or closer to the fifth surface than the sixth surface; and
a polarity of the second metal portion is opposite to a polarity of the first metal portion, the second metal portion is electrically connected to the body portion and protrudes from the body portion along a first direction; the second metal portion extends out of the housing;
the first bonding part is configured to bond the first surface, the third surface, the seventh surface, the fourth surface, and the second surface; and
the second bonding part is configured to bond the first surface and the fifth surface but not to bond the sixth surface.

2. The battery according to claim 1, **characterized in that** the first bonding part bonds the first surface, the third surface, the seventh surface, the fourth surface, and the second surface in sequence.

3. The battery according to claim 1, **characterized in that**, in the first direction, edges of the second bonding part do not exceed the edges of the separator.

4. The battery according to claim 1, **characterized in that**, a third direction is defined perpendicular to the first direction and the second direction, and
in the third direction, a length of the body portion is W, a length of the first bonding part is W₁, a length of the second bonding part is W₂, and 0.7 W ≤ W1 < W and/or 0.7 W ≤ W₂ ≤ W.

5. The battery according to claim 4, **characterized in that** 0.8 W ≤ W₁ ≤ 0.9 W and/or 0.8 W ≤ W₂ ≤ 0.9 W.

6. The battery according to claim 1, **characterized in that**, a third direction is defined perpendicular to the first direction and the second direction;
as viewed from the second direction, the third surface comprises a first arc surface region, a first region, and a second arc surface region that are sequentially connected in the third direction; and
the first bonding part is bonded to the first region and bonded to at least one of the first arc surface region or the second arc surface region.

7. The battery according to claim 1, **characterized in that**, a third direction is defined perpendicular to the first direction and the second direction;
as viewed from the second direction, the fifth surface comprises a third arc surface region, a second region, and a fourth arc surface region sequentially connected in the third direction, and
the second bonding part is bonded to the second region and bonded to at least one of the third arc surface region or the fourth arc surface region.

8. The battery according to claim 1, **characterized in that** at least one first through-hole is made on a first part of the first bonding part and the first part of the first bonding part being a part bonded to the seventh surface.

9. The battery according to claim 8, **characterized in that** a diameter d₂ of the first through-hole is 0.5 mm to 2 mm, and/or a distance d₃ between adjacent first through-holes is 1 mm to 4 mm.

10. The battery according to claim 8, **characterized in that** at least one second through-hole is made on a second part of the first bonding part and is the second part of the first bonding part being a part bonded to the first surface, and a hole ratio per unit area of the second part of the first bonding part is less than a hole ratio per unit area of the first part of the first bonding part.

11. The battery according to claim 8, **characterized in that** at least one third through-hole is made on a third part of the first bonding part and is the third part of the first bonding part being a part bonded to the second surface, and a hole ratio per unit area of the third part of the first bonding part is less than a hole ratio per unit area of the first part of the first bonding part.

12. The battery according to claim 1, **characterized in that**, at least one of a first part of the first bonding part and a second part of the first bonding part is provided without through holes; the first part of the first bonding part being a part bonded to the first surface and the second part of the first bonding part being a part bonded to the second surface.

13. The battery according to claim 1, **characterized in that**, a third direction is defined perpendicular to the first direction and the second direction, and the first bonding part comprises a plurality of first sub-bonding parts spaced apart in the third direction.

14. The battery according to claim 1, **characterized in that** the first electrode plate comprises a first current collector, and the first surface comprises at least a part of a surface of the first current collector.

15. The battery according to claim 1, **characterized in that** the housing is a packaging film having a multi-layer structure.

16. The battery according to claim 1, **characterized in that** an eighth surface is disposed on the second protruding portion in the first direction, and a fifth bonding part sequentially bonds the fifth surface, the eighth surface, and the sixth surface; the fifth bonding part is absent on the body portion.

17. An electronic device, comprising the battery according to any one of claims 1 to 16.
